# EUROPEAN PATENT SPECIFICATION

(11) **EP 1 096 217 B1**
(45) Date of publication and mention of the grant of the patent: **25.02.2004**
(21) Application number: 00118796.2
(22) Date of filing: 30.08.2000
(51) Int. Cl.: F28D 5/02, F25B 39/04

(54) **Evaporative cooling device**
Kühlungsanlage mit Verdampfung
Dispositif de refroidissement par évaporation

(30) Priority: 29.10.1999 CN 99249374
(43) Date of publication of application: 02.05.2001
(73) Proprietor: Taiwan Fluorescent Lamp Co., Ltd., Taipei 10407, Taiwan (CN)
(72) Inventor: Tien, Chang-Wen, Pao Shan Hsiang, Hsin Chu Hsien (TW)
(74) Representative: Viering, Jentschura & Partner

(56) References cited:
- EP-A- 0 654 649
- US-A- 2 218 596
- US-A- 3 908 393
- US-A- 5 048 304
- US-A- 5 701 748

## Description

### FIELD OF THE INVENTION

The present invention relates to a cooling device.

### BACKGROUND OF THE INVENTION

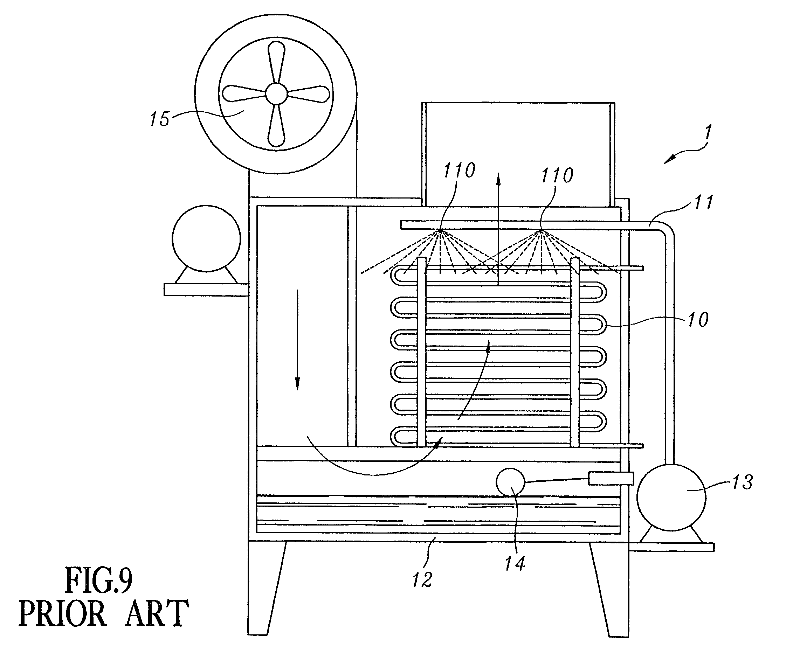

In Fig. 9 is shown a conventional cooling device 1 using water evaporation and air cooling for cooling. In this prior art, the cooling device comprises wound refrigerant tubes 10. A water supply pipe is arranged above the refrigerant tubes 10. The water supply tube 11 is installed with spray 110 for spraying cooling water to the refrigerant tubes 10 for absorbing the heat of the condensed gas refrigerant and reduce the temperature. The cooling water after heat exchange is collected by the water collecting disk 1 at the bottom. Then the cooled water is pumped by the water pump 13 to the water supply tube 11 for recycling. By the potential heat from the vaporized water and the convection from contact between water and refrigerant tubes 10 cooling is achieved. A float ball switch 14 is installed in the water collecting disk 12 for supplying cooling water at a proper time. Besides, in order to enhance the cooling efficiency, a heat dissipating fan 15 is added for enforcing the airflow to flow between the refrigerant tube so as to carry the vapor and cooling water away from the refrigerant tubes. Therefore, the device uses water evaporation and air cooling in combination thereby achieving a higher coding efficiency than in case when only water evaporation or air cooling is used.

However, in this cooling device 1, the spraying means is only installed above a machine and sprays water downwards. Moreover, the spraying is only in some points or some determined directions. Therefore, only the several uppermost layers of the refrigerant tubes can be sprayed densely. Further, only some specific refrigerant tubes can be directly sprayed. The refrigerant tubes at the middle or lower layers are only insufficiently sprayed with water, the water dropping from the upper layers falls onto these refrigerant tubes. That is, as a whole, the cooling area is not uniform, and therefore, the refrigerant can not be cooled continuously and completely. Therefore, the cooling efficiency can not be improved effectively and a large amount of energy is necessary.

US 3,908,393 discloses an air conditioning system which comprises a water basin 35, a condenser fan 27, a chamber surrounded by the coils 23 and a nozzle 43 spraying water from the pump.

Accordingly, there is an eager demand for a novel high efficiency cooling device used in a cooling mechanism which can improve the prior art design.

### SUMMARY OF THE INVENTION

Accordingly, the primary object of the present invention is to provide a high efficiency cooling device in a cooling mechanism comprising a heat exchange unit and a water distribution unit. The heat exchange unit is an upright round frame formed of a plurality of upright heat radiating fins and refrigerant tubes which are densely wound around these heat radiating fins; the round frame encloses a hollow chamber. The water distribution unit is installed in the hollow chamber of the heat exchange unit. The water distribution unit mainly includes at least two spray disks driven by a motor or other dynamic device and a first water supply tube for supplying cooling water to the spray disks.

The cooling device further includes a ventilation unit installed above the hollow chamber of the heat exchange unit.

The ventilation unit includes a heat dissipating fan.

A first water supply solenoid valve for controlling water supply is installed on the first water supply tube.

A plurality of trenches extending outwards are installed on a disk surface of the spray disks.

The disk surface of the spray disksis installed with a plurality of ribs extending outwards.

The trenches or ribs on the spray disk have a spiral shape.

The cooling device further includes a water circulation unit for collecting the cooling waste water from the heat exchange unit.

The water distribution unit includes a water box installed at the bottom of the heat exchange unit; a water pump is installed in the water box; the water pump is connected to the first water supply tube having the first water supply solenoid valve by a return pipe; and a switching valve is installed in the return pipe.

A level switch for sensing the water level is further installed in the water box.

The water box is further installed with a water draining pipe near the bottom, and a water draining solenoid valve is installed on the water draining pipe.

The water box further includes a float ball switch for sensing the water level, the float ball switch is connected to a second water supply solenoid valve for supplying cooling water to the water box.

A water collecting disk is further installed on the bottom of the heat exchange unit above the water box and a connecting pipe is installed between the water collecting disk and the water box.

The periphery of the water collecting disk is installed with a shield extending outwards.

By aforesaid structure, the cooling effect can be improved, and energy can be saved.

The various objects and advantages of the present invention will be more readily understood from the following detailed description when reading in conjunction with the appended drawings.

### BRIEF DESCRIPTION OF THE DRAWINGS

Fig. 1 is a schematic view of the first embodiment of the present invention.
Fig. 2 is a schematic view of the first embodiment of the present invention.
Fig. 3 is an elevation view showing the spray disk of the present invention.
Fig. 4 is a lateral plane view of the spray disk of the present invention.
Fig. 5 is a perspective view showing another embodiment of the spray disk of the present invention.
Fig. 6 is a lateral plane view of another embodiment of the spray disk of the present invention.
Fig. 7 is a perspective view showing a further embodiment of the spray disk of the present invention.
Fig. 8 is a schematic view showing another water spray way of the present invention.
Fig. 9 is a structural schematic view of a prior art cooling device.

### DETAILED DESCRIPTION OF THE PREFERRED EMBODIMENTS

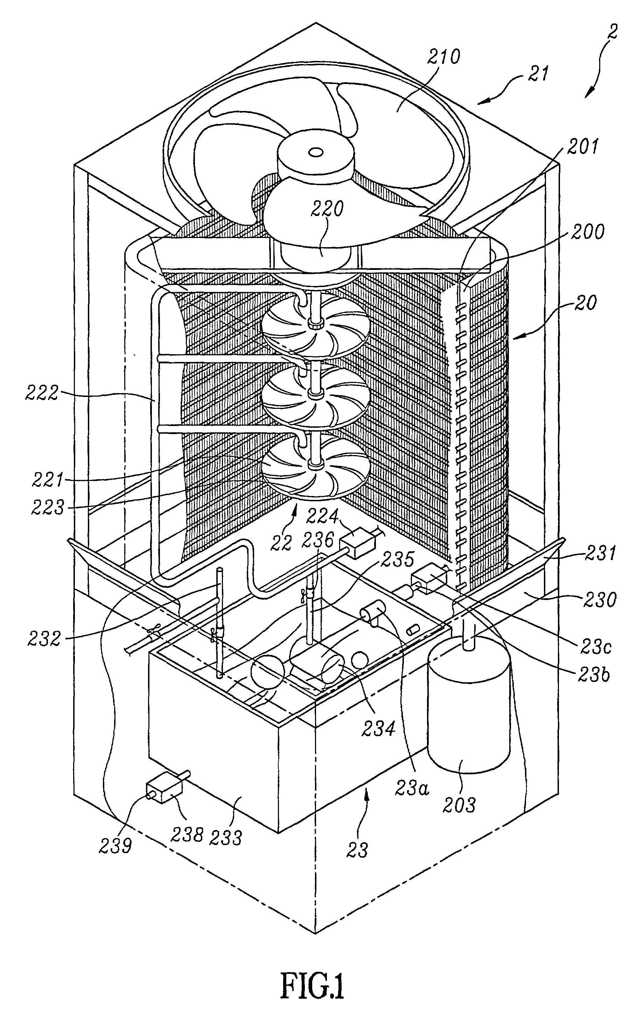

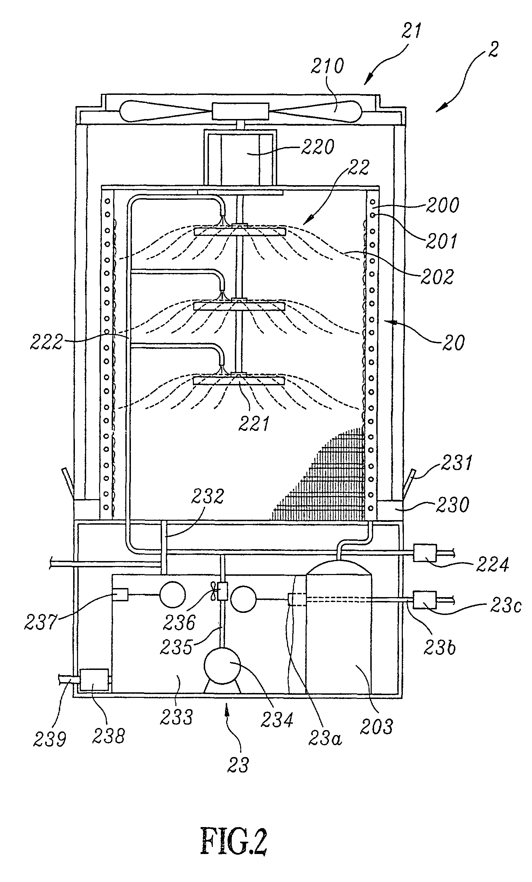

With reference to Figs. 1 and 2, the cooling device 2 of the present invention includes a heat exchange unit 20, a ventilation unit 21, a water distribution unit 22 and a water circulation unit 23.

The heat exchange unit 20 is an upright round frame formed of a plurality of upright heat radiating fins 200 and refrigerant tubes 201 which are densely wound around these heat radiating fins 200. The round frame is formed with a hollow chamber 202. The refrigerant tubes 201 of the heat exchange unit 20 are connected to an air compressor 203 and an evaporator (not shown) so as to form a refrigerant circulation system. Heat transferring dielectric refrigerant is filled in the refrigerant tubes 201, and the heat of the refrigerant is absorbed by the evaporator to become gas refrigerant, which is then driven and enters the heat exchange unit 20, where the heat of the refrigerant is released so as to be condensed to become liquid refrigerant.

The ventilation unit 21 is installed above the hollow chamber 202 of the heat exchange unit 200. The ventilation unit 21 may include a heat dissipating fan 210 or eccentric wind wheel. Thereby, the air flows laterally and outwards and reduces the temperature around each heat radiating fin 100 of the heat exchange unit 200 by heat exchange with the refrigerant tubes 201.

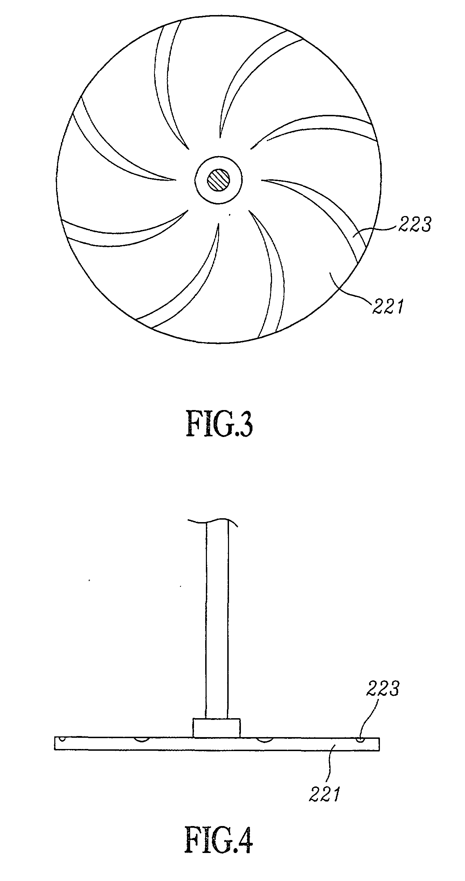

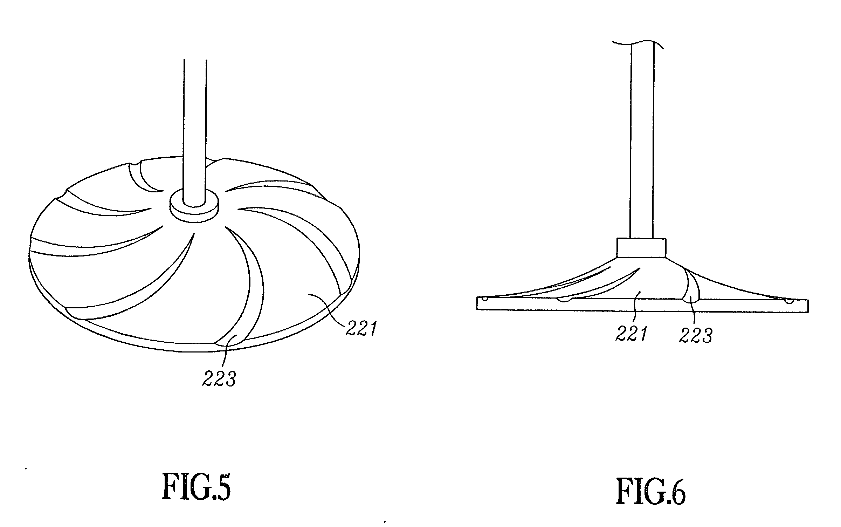

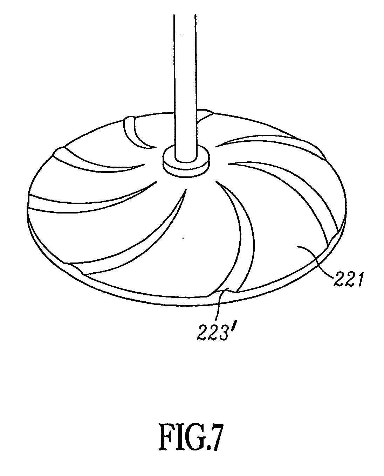

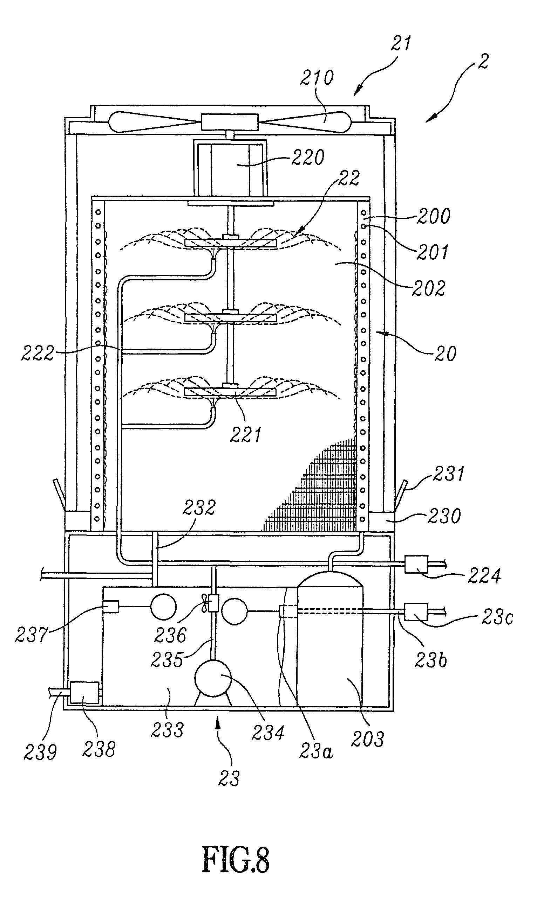

The water distribution unit 22 is installed in the hollow chamber 202 of the heat exchange unit 20. The water distribution unit 22 mainly includes at least two spray disksdriven by a motor or other dynamic devices 220 and a first water supply tube 222 for supplying cooling water to the spray disks 221. The configuration of the spray disk 221 may be as that shown in Fig. 3 and 4, wherein a plurality of spiral or radiating shape trenches 223 extend inwards, or with ribs 223' as shown in Fig. 7, or cone-shaped as shown in Figs. 5 and 6. Thereby, when the cooling water output from the first water supply tube 222 falls to (see Fig. 2) or sprays upwards (see Fig. 8) to a spray disk 221 rotating in a higher speed, the cooling water will uniformly spray to each heat radiating fin 200 and refrigerant tube 201 which are arranged on the periphery due to the inertial force of rotation itself and by the strong blowing of the ventilation unit 21, and then flows downwards straightly along the upright heat radiating fin 200 so that the cooling water can sufficiently and completely contact each heat radiating fin 200. Therefore, the cooling water may uniformly and rapidly absorb and exhaust the cooling heat of the refrigerant so that temperature is decreased quickly. Therefore, the cooling efficiency is improved greatly so as to save power.

Besides, the bottom of the heat exchange unit is installed with a water circulation unit 23. The water circulation unit 23 includes a water collecting disk 230 for collecting cooling water. The periphery of the disk is installed with a shield 231 which extended upwards and tiltly. The bottom of the disk is further installed with a water box 233 connected by a connecting pipe 232. A water pump 234 is installed within the water box 233. A return pipe 235 is connected between the water pump 234 and the first water supply tube 222 for guiding the cooling water within the water box 233 to be returned back to the first water supply tube 222. A switch valve 236 for selecting the way for supply water is installed on the return tube 235. Furthermore, a further level switch 237 is installed in the water box 233 and a water draining pipe 239 having a water draining solenoid valve 238 is connected near the bottom thereof. When the water draining solenoid valve 238 is opened, the cooling waste water within the water box 233 can be drained out. Moreover, a float ball switch 23a is connected to a second water supply tube 23b. A second water supplying solenoid valve 23c is installed on the second water supply tube 23b for controlling the water supply. The opening or closing thereof can be controlled by the float ball switch 23a.

Therefore, the water supply way of the present invention can be divided in a pump circulation mode and a direct supply mode. When the pump is switched to the pump circulation mode, the second solenoid valve 23c will be opened so that the second water supply tube 23b is actuated to fill the water box 233 with water. When the level attains a set value, the float ball switch 23a will be induced so as to stop filling water. When the level switch 237 senses that the water has attained a preset level, the water pump 234 is actuated automatically to supply water. Then, water is transferred to the spray disk 221 for spray water to the heat exchange unit 20. Finally, the cooling water flows downwards to be collected by the connecting pipe 232 in the water collecting disk 230. Therefore, the cooling water can be recycled for use again and again.

When wasted cooling water is to be drained out, it can be set through an electric control box or by manual operation so that the second solenoid valve 23c is closed, and the water draining solenoid valve 238 is opened automatically for achieving the function of renewing the water therein. When the level is descended to a preset value, the water pump 234 will close automatically, the second solenoid valve 23c will be opened again, and after the cooling water is filled to a preset level, the water pump 234 is operated for supplying water.

If the switching valve 236 is switched to the direct supply mode, the second solenoid valve 23c will be closed, and the first solenoid valve 224 and water draining solenoid valve 238 are opened. Under this mode, the cooling water will not be returned for use again.

Moreover, a further temperature switch can be installed in the aforesaid electric control box. It can be set to stop supplying water as the temperature is lower than a preset temperature for achieving water saving and using hot gas. A timer can be installed in the electric control box for controlling the time of water supply, water draining and delaying the actuation time of the air compressor.

## Claims

1. A high efficiency cooling device (2) in a cooling mechanism, wherein the cooling device includes a heat exchange unit (20), a water distribution unit (22) and a ventilation unit (21); the heat exchange unit (20) is an upright round frame formed of a plurality of upright heat radiating fins (200) and refrigerant tubes (201) which densely wind around these heat radiating fins (200); the round frame encloses a hollow chamber (202); the water distribution unit (22) is installed in the hollow chamber (202) of the heat exchange unit (20) the ventilation unit (21) is installed above the hollow chamber, **characterized in that** the water distribution unit (22) mainly includes at least two rotating spray disks (221) driven by a motor (220) or other dynamic device and a first water supply tube (222) for supplying cooling water to the spray disks (221).

2. The high efficiency cooling device (2) in a cooling mechanism as claimed in claim 1, wherein the ventilation unit (21) includes a heat dissipating fan (210).

3. The high efficiency cooling device (2) in a cooling mechanism as claimed in claim 1, wherein a first water supply solenoid valve (224) for controlling the water supply is installed on the first water supply tube (222).

4. The high efficiency cooling device (2) in a cooling mechanism as claimed in claim 1, wherein a plurality of trenches (222) extending outwards are installed on a disk surface of the spray disk (221).

5. The high efficiency cooling device (2) in a cooling mechanism as claimed in claim 1, wherein the disk surface of the spray disks (221) is installed with a plurality of ribs (223') extending outwards.

6. The high efficiency cooling device (2) in a cooling mechanism as claimed in claim 4 or 5, wherein the trenches (223) or ribs (223') on the spray disks (221) have a spiral shape.

7. The high efficiency cooling device (2) in a cooling mechanism as claimed in claim 1, wherein the cooling device further includes a water circulation unit (23) for collecting the cooling waste water from the heat exchange unit (20) and recycling the waste water to the first water supply tube (222).

8. The high efficiency cooling device (2) in a cooling mechanism as claimed in claim 7, wherein the water distribution unit (22) includes a water box (223) installed at the bottom of the heat exchange unit (20); a water pump (234) installed in the water box (233); the water pump (234) is connected to the first water supply (222) tube having the first water supply solenoid valve (224) by a return pipe (235); and a switching valve (236) is installed in the return pipe (235).

9. The high efficiency cooling device (2) in a cooling mechanism as claimed in claim 8, wherein a level switch (237) for sensing the water level is further installed in the water box (233).

10. The high efficiency cooling device (2) in a cooling mechanism as claimed in claim 8, wherein the water box (233) is further installed with a water draining pipe (239) near the bottom, and a water draining solenoid valve (238) is installed on the water draining pipe (239).

11. The high efficiency cooling device (2) in a cooling mechanism as claimed in claim 8, wherein the water box (233) further includes a float ball switch (23a) for sensing the water level, the float ball switch (23a) is connected to a second water supply solenoid valve (23c).

12. The high efficiency cooling device (2) in a cooling mechanism as claimed in claim 1 and 8, wherein a water collecting disk (230) is further installed on the bottom of the heat exchange unit (20) above the water box (233) and a connecting pipe (232) is installed between the water collecting disk (230) and the water box (233).

13. The high efficiency cooling device (2) in a cooling mechanism as claimed in claim 12, wherein the periphery of the water collecting disk (230) is installed with a shield (231) extending outwards.

## Patentansprüche

1. Kühlvorrichtung (2) mit hoher Effektivität in einem Kühlmechanismus, wobei die Kühlvorrichtung eine Wärmeaustauscheinheit (20), eine Wasserverteilungseinheit (22) und eine Ventilationseinheit (21) aufweist, wobei die Wärmeaustauscheinheit (20) ein aufrechter runder Rahmen ist, der von einer Mehrzahl von aufrechten wärmeabstrahlenden Rippen (200) und Kühlrohren (201) gebildet ist, die sich um diese wärmeabstrahlenden Rippen (200) dicht winden, wobei der runde Rahmen eine hohle Kammer (202) einschließt, wobei die Wasserverteilungseinheit (22) in der hohlen Kammer (202) der Wärmeaustauscheinheit (20) installiert ist, wobei die Ventilationseinheit (21) oberhalb der hohlen Kammer installiert ist, **gekennzeichnet dadurch, dass** die Wasserverteilungseinheit (22) hauptsächlich wenigstens zwei rotierende Sprühscheiben (221), die von einem Motor (220) oder einer anderen dynamischen Vorrichtung angetrieben sind und ein erstes Wasserzuführungsrohr (222) zum Zuführen von Kühlwasser zu den Sprühscheiben (221) aufweist.

2. Kühlvorrichtung (2) mit hoher Effektivität in einem Kühlmechanismus gemäß Anspruch 1, wobei die Ventilationseinheit (21) ein wärmeabführendes Gebläse (210) aufweist.

3. Kühlvorrichtung (2) mit hoher Effektivität in einem Kühlmechanismus gemäß Anspruch 1, wobei ein erstes Wasserzuführungsmagnetventil (224) zum Steuern der Wasserzuführung an dem ersten Wasserzuführungsrohr (222) installiert ist.

4. Kühlvorrichtung (2) mit hoher Effektivität in einem Kühlmechanismus gemäß Anspruch 1, wobei eine Mehrzahl von nach außen sich erstreckenden Rinnen (223) auf der Oberfläche der Sprühscheiben (221) installiert ist.

5. Kühlvorrichtung (2) mit hoher Effektivität in einem Kühlmechanismus gemäß Anspruch 1, wobei die Scheibenoberfläche der Sprühscheiben (221) mit einer Mehrzahl von nach außen sich erstreckenden Rippen (223') installiert ist.

6. Kühlvorrichtung (2) mit hoher Effektivität in einem Kühlmechanismus gemäß Anspruch 4 oder 5, wobei die Rinnen (223) oder die Rippen (223') auf den Sprühscheiben (221) eine Spiralform haben.

7. Kühlvorrichtung (2) mit hoher Effektivität in einem Kühlmechanismus gemäß Anspruch 1, wobei die Kühlvorrichtung ferner eine Wasserzirkulationseinheit (23) zum Sammeln von Kühlabwasser von der Wärmeaustauscheinheit (20) und zum Recyceln des Abwassers zu dem ersten Wasserzuführungsrohr (222) aufweist.

8. Kühlvorrichtung (2) mit hoher Effektivität in einem Kühlmechanismus gemäß Anspruch 7, wobei die Wasserverteilereinheit (22) einen Wasserkasten (223) aufweist, der an dem Boden der Wärmeaustauscheinheit (20) installiert ist, wobei eine Wasserpumpe (234) in dem Wasserkasten (233) installiert ist, wobei die Wasserpumpe (234) mit dem ersten Wasserzuführungsrohr (222) verbunden ist, die das erste Wasserzuführungsmagnetventil (224) von einer Rückführleitung (235) aufweist, und wobei ein Schaltventil (236) in der Rückführleitung (235) installiert ist.

9. Kühlvorrichtung (2) mit hoher Effektivität in einem Kühlmechanismus gemäß Anspruch 8, wobei ein Niveauschalter (237) zum Abtasten des Wasserniveaus in dem Wasserkasten (233) ferner installiert ist.

10. Kühlvorrichtung (2) mit hoher Effektivität in einem Kühlmechanismus gemäß Anspruch 8, wobei der Wasserkasten (233) ferner mit einem Wasserdränagerohr (239) in der Nähe des Bodens installiert ist, und wobei ein Wasserdränagenmagnetventil (238) in dem Wasserdränagerohr (239) installiert ist.

11. Kühlvorrichtung (2) mit hoher Effektivität in einem Kühlmechanismus gemäß Anspruch 8, wobei der Wasserkasten (233) ferner einen Schwimmkugelschalter (23a) zum Abtasten des Wasserniveaus aufweist, wobei der Schwimmkugelschalter (23a) mit einem zweiten Wasserzuführungsmagnetventil (23c) verbunden ist.

12. Kühlvorrichtung (2) mit hoher Effektivität in einem Kühlmechanismus gemäß Anspruch 1 oder 8, wobei eine Wassersammelscheibe (230) auf dem Boden der Wärmeaustauscheinheit (20) oberhalb des Wasserkastens (233) ferner installiert ist und ein Verbindungsrohr zwischen der Wassersammelscheibe (230) und dem Wasserkasten (233) installiert ist.

13. Kühlvorrichtung (2) mit hoher Effektivität in einem Kühlmechanismus gemäß Anspruch 12, wobei der Umfang der Wassersammelscheibe (230) mit einem nach außen sich erstreckenden Schild (231) installiert ist.

## Revendications

1. Dispositif de refroidissement à rendement élevé (2) dans un mécanisme de refroidissement, dans lequel le dispositif de refroidissement comprend une unité d'échange de chaleur (20), une unité de distribution d'eau (22) et une unité de ventilation (21) ; l'unité d'échange de chaleur (20) est un cadre circulaire vertical formé d'une pluralité d'ailettes de rayonnement de chaleur verticales (200) et de tubes réfrigérants (201) qui serpentent de manière dense autour des ailettes de rayonnement de chaleur (200) ; le cadre circulaire enferme une chambre creuse (202) ; l'unité de distribution d'eau (22) est installée dans la chambre creuse (202) de l'unité d'échange de chaleur (20) ; l'unité de ventilation (21) est installée au-dessus de la chambre creuse, **caractérisé en ce que** l'unité de distribution d'eau (22) comprend principalement au moins deux disques de pulvérisation rotatifs (221) commandés par un moteur (220) ou un autre dispositif dynamique et un premier tube d'approvisionnement en eau (222) pour approvisionner de l'eau de refroidissement aux disques de pulvérisation (221) d'une chambre.

2. Dispositif de refroidissement à rendement élevé (2) dans un mécanisme de refroidissement selon la revendication 1, dans lequel l'unité de ventilation (21) comprend un ventilateur de dispersion de chaleur (210).

3. Dispositif de refroidissement à rendement élevé (2) dans un mécanisme de refroidissement selon la revendication 1, dans lequel une première électrovanne d'approvisionnement en eau (224) pour contrôler l'approvisionnement en eau est installée sur le premier tube d'approvisionnement en eau (222).

4. Dispositif de refroidissement à rendement élevé (2) dans un mécanisme de refroidissement selon la revendication 1, dans lequel une pluralité de tranchées (223) s'étendant vers l'extérieur est installée sur une surface de disque des disques de pulvérisation (221).

5. Dispositif de refroidissement à rendement élevé (2) dans un mécanisme de refroidissement selon la revendication 1, dans lequel la surface de disque des disques de pulvérisation (221) est installée avec une pluralité de nervures (223') s'étendant vers l'extérieur.

6. Dispositif de refroidissement à rendement élevé (2) dans un mécanisme de refroidissement selon la revendication 4 ou 5, dans lequel les tranchées (223) ou les nervures (223') sur les disques de pulvérisation (221) ont une forme spirale.

7. Dispositif de refroidissement à rendement élevé (2) dans un mécanisme de refroidissement selon la revendication 1, dans lequel le dispositif de refroidissement comprend en outre une unité de circulation d'eau (23) pour collecter l'eau usée de refroidissement de l'unité d'échange de chaleur (20) et recycler l'eau usée jusqu'au premier tube d'approvisionnement en eau (222).

8. Dispositif de refroidissement à rendement élevé (2) dans un mécanisme de refroidissement selon la revendication 7, dans lequel l'unité de distribution d'eau (22) comprend un caisson à eau (233) installé au bas de l'unité d'échange de chaleur (20) ; une pompe à eau (234) installée dans le caisson à eau (233) ; la pompe à eau (234) est raccordée au premier tube d'approvisionnement en eau (222) ayant la première électrovanne d'approvisionnement en eau (224) par un tuyau de renvoi (235) ; une vanne de commutation (236) est installée dans le tuyau de renvoi (235).

9. Dispositif de refroidissement à rendement élevé (2) dans un mécanisme de refroidissement selon la revendication 8, dans lequel un commutateur de niveau (237) pour détecter le niveau d'eau est installé en outre dans le caisson à eau (233).

10. Dispositif de refroidissement à rendement élevé (2) dans un mécanisme de refroidissement selon la revendication 8, dans lequel le caisson à eau (233) est installé en outre avec un tuyau de drainage d'eau (239) proche du bas, et une électrovanne de drainage d'eau (238) est installée sur le tuyau de drainage d'eau (239).

11. Dispositif de refroidissement à rendement élevé (2) dans un mécanisme de refroidissement selon la revendication 8, dans lequel le caisson à eau (233) comprend en outre un commutateur de flotteur (23a) pour détecter le niveau d'eau, le commutateur de flotteur (23a) est raccordé à une seconde électrovanne d'approvisionnement en eau (23c).

12. Dispositif de refroidissement à rendement élevé (2) dans un mécanisme de refroidissement selon les revendications 1 et 8, dans lequel un disque collecteur d'eau (230) est installé en outre sur le bas de l'unité d'échange de chaleur (20) au-dessus de le caisson à eau (233) et un tuyau de raccordement (232) est installé entre le disque collecteur d'eau (230) et le caisson à eau (233).

13. Dispositif de refroidissement à rendement élevé (2) dans un mécanisme de refroidissement selon la revendication 12, dans lequel la périphérie du disque collecteur d'eau (230) est installée avec un bouclier (231) s'étendant vers l'extérieur.
